Europäisches Patentamt

European Patent Office

Office européen des brevets

(19)

(11) Publication number: **0 375 435**
**A2**

## EUROPEAN PATENT APPLICATION

(21) Application number: 89313458.5

(22) Date of filing: 21.12.89

(51) Int. Cl.5: **G06F 15/60**

(30) Priority: 22.12.88 US 290722

(43) Date of publication of application:
27.06.90 Bulletin 90/26

(84) Designated Contracting States:
DE FR GB IT

(71) Applicant: **THIOKOL CORPORATION**
PO Box No. 9260
**Ogden, Utah 84409(US)**

(72) Inventor: **Cox, Duane Morley**
**1329 Sumac Drive**
**Logan Utah 84321(US)**

(74) Representative: **Bankes, Stephen Charles**
**Digby et al**
**BARON & WARREN 18 South End Kensington**
**London W8 5BU(GB)**

(54) **Method of developing and making an article having a pre-determined reliability level.**

(57) A method of developing an article with enhanced reliability without unnecessarily reducing performance or increasing costs. A reliability value is allocated to each failure mode. For at least one of the failure modes, an estimated third population is derived from the estimated perforamnce and capability populations from which the number of tests required to verify the allocated reliability value is determined. If the required number of tests is greater than feasible, the design is re-estimated for the failure mode and the process repeated until the required number of tests is satisfactory. The articles are then built and tested and actual reliability values are obtained which are compared with the allocated reliability values. A decision is made to accept the design or to increase the number of tests to obtain an actual reliability value which is equal to the allocated reliability value or to re-allocate a different reliability value to the failure mode in accordance with the actual reliability value or to re-estimate the design for the failure mode and repeat the process.

EP 0 375 435 A2

# METHOD OF DEVELOPING AND MAKING AN ARTICLE HAVING A PRE-DETERMINED RELIABILITY LEVEL

The present invention relates to the development and manufacture of articles which are meant to include apparatus, articles of manufacture, compositions of matter, manufacturing processes, and other processes whose success is a function of limits which can be described in some manner. More particularly, the present invention relates to the development and manufacture of articles wherein statistical methods are used to enhance reliability while cost may be minimized and performance may be enhanced.

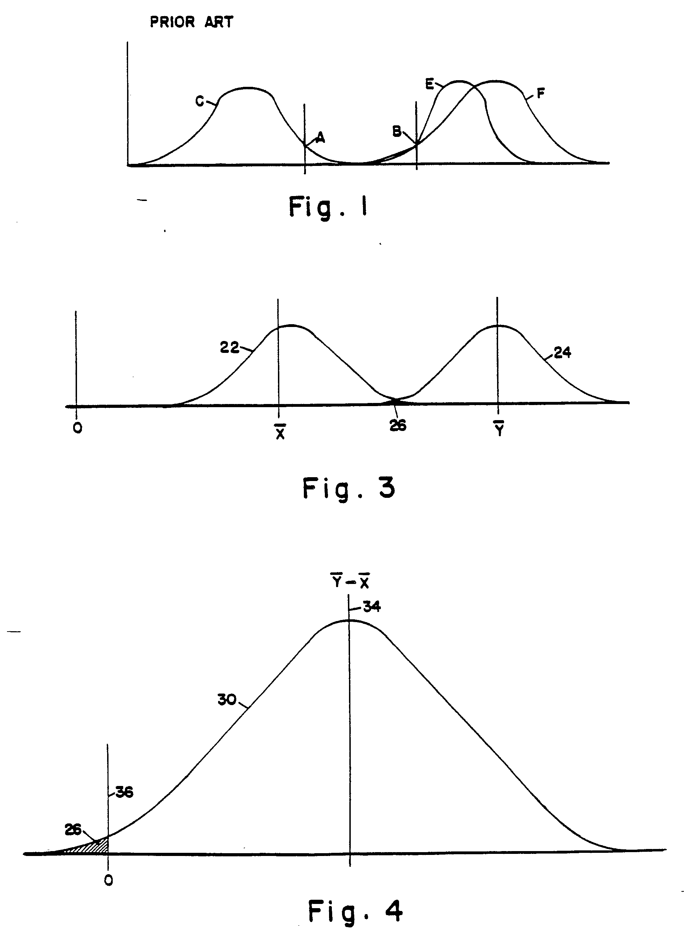

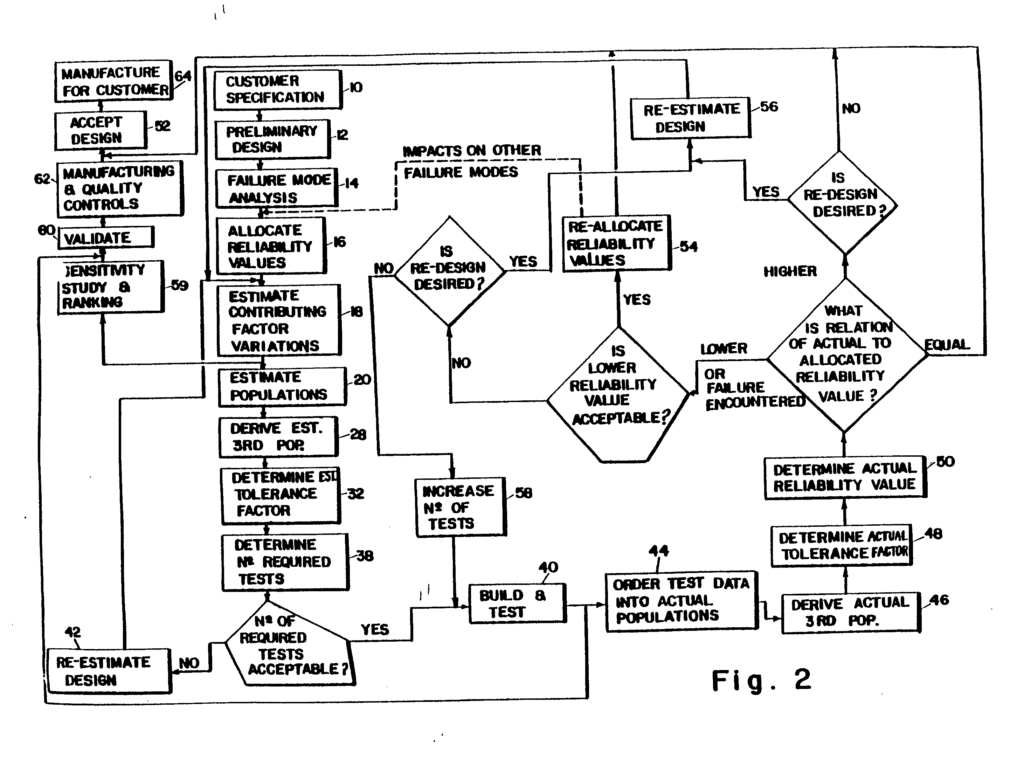

Traditionally, articles have been designed using safety factors which control the relationship of one discrete point in the capability population with respect to another discrete point in the performance population for individual articles attributes. The disadvantages of this approach are illustrated in Fig. 1 wherein multiple probability distribution functions of capability populations such as illustrated at E and F may each have the same point B which represents a selected number, perhaps three, of standard deviations from the mean thereof. While the safety factor approach, which uses the relationship B/A (wherein A represents a selected number, perhaps three, of standard deviations from the mean of a probability distribution function of the corresponding performance population illustrated at C) which must be greater than a pre-determined number and thus requires these points A and B to be spread apart, does take into account these points, it undesirably does not take into account all of the attributes of each capability population. More specifically, it does not take into account the amount of overlap between two populations. Thus, populations C and F have a higher percent overlap than populations C and E. The region of overlap represents conditions wherein the article may fail. Thus, an article with populations C and F is more likely to fail than an article with populations C and E, yet the safety factor approach does not take this into account and thus undesirably results in variable or undependable levels of reliability for individual article attributes. Likewise, multiple probability distribution functions of performance populations may each have the same point A which represents the selected number of standard deviations from the mean wherein the safety factor approach undesirably does not take into account all of the attributes of each performance population. Thus, the use of the safety factor approach may sometimes result in a false sense of security and at other times may result in an unnecessary performance or cost penalty.

Another type of design approach is the traditional probabilistic technique wherein the performance and capability population probability density functions are evaluated and a joint population probability density function is created in accordance with a mathematical expression that describes the failure mode being evaluated. The tolerance factor may be determined to be the number of standard deviations from the nominal of the joint probability density function to the point where the function crosses the zero value on the horizontal axis, which is the boundary between failures and nonfailures. The probability of failure ($P_f$) is then determined using standard normal area tables, and the reliability (R) is calculated using the expression $R = 1 - P_f$. However, the use of the standard normal area tables implies total knowledge of the parameters of the populations. This is equivalent to assuming that an infinite number of tests have been run to describe the populations, and thus the process yields an optimistically high level of attribute reliability which is undesirably inconsistent with the level of testing which can be achieved or afforded. For example, the expense of large solid rocket motors is such that it may only be feasible to test a limited number thereof during their development. A limitation of this probabilistic design approach is therefore that whatever tests are run will be insufficient to validate the target reliability value.

Use of tolerance factors tables, commonly known as "K" tables, have been an effective way to estimate reliability levels of articles or article portions actually subject to tests. While this method has been successfully applied to characterize reliability values at specific confidence levels for finite levels of testing, it provides an after the fact results rather than an approach to pre-plan the level of testing necessary to verify reliability levels essential to meeting specific article requirements.

In recognition of the difficulties in testing some article portions, the safety factors or the reliability tolerance factors for those article portions not tested are sometimes required to be higher than they would be if the article portions were tested.

Another traditional approach may be called a "build, use, fail, fix" approach. This methodology normally begins with the use of a classical safety factor or probabilistic design, but this step may sometimes be skipped. Then parts are built and used. While the parts are in production and being used, some of the hardware may be examined for evidence of failure initiation, or actual failures of the production hardware may be experienced. If this occurs, the hardware is then re-designed, and production/testing continues. The reliability of the product is determined based upon the binomial evaluation of the number of successes where failures corrected by re-design are purged from the binomial counting process. A difficulty with this process is that the reliability of the product is based upon a process that is refined through "after-the-fact" evidence of product insufficiency followed by correction and therefore may, since deficiencies are not avoided before the fact, undesirably result in failures while in production. This approach also undesirably requires substantial numbers of tests to demonstrate modest article reliability levels.

It is therefore an object of the present invention to provide a statistical method for the development of an article which identifies a pre-planned level of testing necessary to verify reliability levels essential to meeting specific article requirements.

It is another object of the present invention to provide such a statistical method wherein the reliability may be enhanced while meeting performance or cost targets.

The above and other objects, features, and advantages of the present invention will be apparent in the following detailed description of the preferred embodiments of the present invention taken in conjunction with the accompanying drawings.

In the Drawings:

Fig. 1 is a graph which illustrates the disadvantages of the design to safety factor approach of the prior art;

Fig. 2 is a flow diagram which illustrates a process according to the present invention;

Fig. 3 is a graph illustrating the curves for the target performance and capability population probability density functions for a failure mode of an article portion;

Fig. 4 is a graph which illustrates the curve for a joint population probability density function derived by subtracting the estimated performance from the estimated capability population probability density functions of Fig. 3;

Fig. 5 is a graph of reliability values for tolerance factors at a 90% confidence level for various numbers of tests N;

Fig. 6 is a sectional view of a solid propellant rocket motor which may be developed and built using the method of the present invention; and

Fig. 7 is a schematic view showing the locations of stations G to Y on a rocket motor nozzle for purposes of Table III.

Detailed Description of the Preferred Embodiments

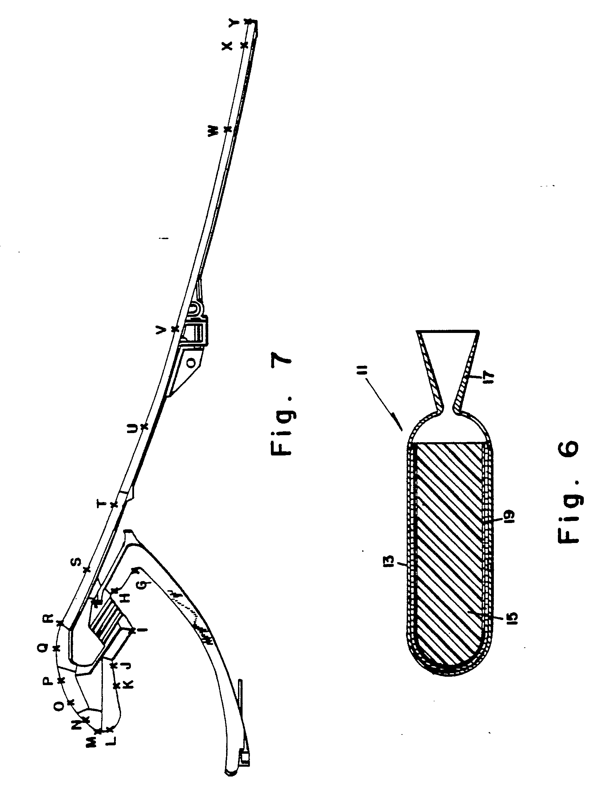

Referring to Fig. 2, there is shown a flow diagram which illustrates a process of the present invention. The process may begin with a customer specification, as illustrated at 10, for an article such as, for example, a conventional solid propellant rocket motor, illustrated generally at 11 in Fig. 6, which includes a case 13, solid propellant 15, a nozzle 17, and insulation 19 between the case and propellant. As illustrated at 12, a preliminary design is originated. As illustrated at 14, an analysis of the identified failure modes of the article portions is made. Target reliability values are then allocated to each of the independent failure modes, as illustrated at 16, to achieve a target reliability for the article or system. For example, table I illustrates the allocation of target reliability values to a simplified list of various components of a solid propellant propulsion system such as the rocket motor shown at 11 in Fig. 6 to achieve a reliability of 0.999700 as compared to a baseline or traditional system on which the preliminary design is based which has a reliability of 0.997611. The overall system reliability is the product of all independent failure mode reliability values. The individual component target reliabilities of this example have been allocated to maximize performance or minimize cost. The components have also been ranked according to cost with the highest cost components being ranked A. As shown in Table I, the highest cost components have been allocated the lowest reliability targets in order to minimize their total life cycle cost.

3

TABLE I

| Component | Baseline (Traditional) | | Advanced System Target (allocated) | |
|---|---|---|---|---|
| | Reliability | Weight (lbs.) | Reliability | Ranking |
| Case | .999030 | 4,133 | .999920 | A |
| Propellant | .999874 | 94,399 | .999920 | A |
| Insulation | .999561 | 1,374 | .999980 | B |
| Ignition System | .999678 | 65 | .999996 | D |
| Fixed Nozzle | .999563 | 1,100 | .999920 | A |
| Interfaces, Brackets, Etc. | .999903 | 300 | .999983 | C |
| Attach Structure | N/A | N/A | .999980 | B |
| Propulsion System | .997611 | 100,000 | .999700 | |

Each of the components is then analyzed relative to the various failure modes thereof, and reliability values are allocated to the failure modes to achieve the target reliability for the component. Thus, the case 13 has two basic structural failure modes, i.e., axial failure and hoop failure. For the propulsion system of Table I, reliability values of 0.99996 may, for example, be assigned to each of the failure modes of the case 13.

The contributing factors for each of the failure modes is then considered. For example, for hoop failure, the hoop stress is equal to the pressure times the radius divided by the thickness. Thus, the pressure, radius, and thickness are the contributing factors to the performance population (stress). The contributing factors to the hoop strength or capability population (strength) may include composition, type of heat treatment, and the like. As illustrated at 18, an estimate of the contributing factor variation for each of the contributing factors is then made based on previous design knowledge. For example, Table II is illustrative of such an estimate for the performance population.

TABLE II

| | mean ($\bar{x}$) | one standard deviation ($\sigma$) |
|---|---|---|
| Pressure (p) | 920 psi | 30 psi |
| Radius (r) | 73 in. | 0.1 in. |
| Thickness (t) | 0.55 in. | 0.02 in. |

Using statistical methods commonly known to those of ordinary skill in the art to which this invention pertains, the parameters for the contributing factors are combined to provide an estimated performance population probability density function, as illustrated at 20. For example, the estimated performance population probability density function for the contributing factors of Table II may have a mean 122,109 psi and a standard deviation of 5,967 psi. A population probability density function is defined, for the purposes of this specification and the claims, as a distribution curve where the area under the curve between any two points on the horizontal axis is equal to the percent of the total population for the total range. For convenience, a population probability density function will be referred to in this specification and the claims as "population." Similarly, the capability population for the hoop failure mode may be estimated to have a mean of 212,000 psi and a standard deviation of 3000 psi. Fig. 3 illustrates a graph of the curve of the performance population (applied stress) at 22 and the curve of the capability population (strength) at 24. The overlapping portion illustrated at 26 of the curves represents the region where failures may occur.

As illustrated at 28 in Fig. 2, an estimated joint population is then derived by applying a suitable failure function or equation from which the amount of overlap between the populations, representing failures, may be determined. For example, the estimated third population may be derived by subtracting the estimated performance population 22 from the estimated capability population 24 using principles commonly known to those of ordinary skill in the art to which this invention pertains. For example, the populations may be subtracted in a random-variable fashion wherein random points in one population are subtracted from random points in the other population. For convenience, a joint population which is derived from a performance and a capability population may also be referred to in this specification and the claims as a "third" population. For example, the estimated third population may have a mean of 89,891 psi and a standard deviation of 6678 psi. Fig. 4 illustrates a graph of the curve of the estimated third population 30 derived by subtracting the estimated performance from the estimated capability populations of Fig. 3 in a random-variable fashion. From this population 30, an estimated reliability value of the failure mode can be determined wherein values greater than or equal to zero represent non-failures and values which are less than zero, illustrated by 26, represent failures.

As illustrated at 32 in Fig. 2, the number of standard deviations from the mean, illustrated at 34 in Fig. 4, of the estimated third population 30 to the point illustrated at 36 in Fig. 4 where the estimated difference between the estimated populations 22 and 24 is zero, i.e., estimated tolerance factor, is then calculated using principles commonly known to those of ordinary skill in the art to which this invention pertains. For example, the number of standard deviations between points 34 and 36, known as the tolerance factor, for the third population 30 may be 13.46.

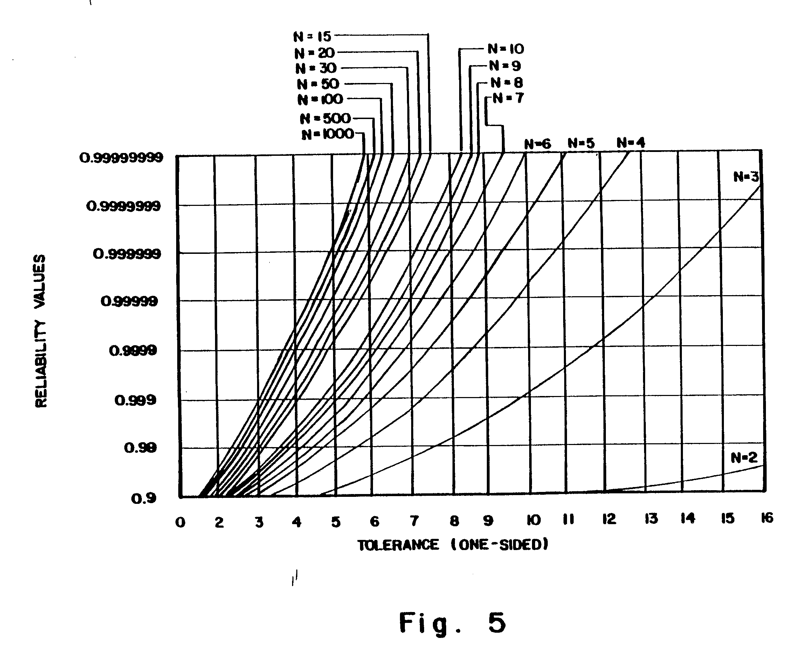

In order to avoid the undesirably unrealistic and unverifiable reliability estimates inherent to traditional probabilistic design techniques and in order to identify a pre-planned level of testing necessary to verify the allocated reliability levels essential to meeting the specific article requirements in accordance with the present invention, the tolerance factors table, commonly known as the "K" table, or an equivalent table or graph is used to determine the number of tests required to obtain the allocated reliability value at the pre-determined confidence level of, for example, 90%, as illustrated at 38 in Fig. 2. "K" tables may be found in various textbooks on statistics and reliability, for example, Table A.8 on page A-34 of Reliability Handbook, edited by W.G. Ireson (McGraw-Hill). An equivalent graph may be plotted, such as shown in Fig. 5 for a 90% confidence level. Since there usually is only one failure boundary between the performance and capability populations, a one-sided tolerance table is applicable. Where multiple failure boundaries exist, other tolerance tables would be used. Knowing the Tolerance, i.e., the number of standard deviations between the mean 34 and the zero point 36 of Fig. 4., which for populations 22 and 24 of Fig. 3 may be 13.46, the graph will indicate the number of tests, indicated by N, required to verify the allocated reliability value which in the example of populations 22 and 24 is 0.99996. The graph of Fig. 5 shows, for this example, that the number of tests required at this reliability value and tolerance to be three at the confidence level of 90%.

If the required number of tests is equal to a selected number of tests, i.e., if it is feasible based on cost, performance, reliability, risk, and any other considerations to conduct that number of tests, then the next step in the process of the present invention is to build and test the required number of articles, as illustrated at 40 in Fig. 2.

However, referring again to Fig. 5, if the tolerance turns out to be 5, the number of tests required to verify the allocated reliability value of 0.99996 would be between 20 and 30. For large rocket motors, such a number of tests may not be feasible due to cost and other considerations. However, the graph of Fig. 5 also shows that to meet the allocated reliability value at a more reasonable test level, i.e., five, the design must be re-estimated, as illustrated at 42 in Fig. 2, to achieve a tolerance value of about 8. Then, as illustrated in Fig. 2, the required number of tests for the re-design is again determined as illustrated at 18, 20, 28, 32, and 38 in Fig. 2 until a satisfactory number of required tests is determined for the allocated reliability value at the pre-determined confidence level.

After the required number of tests have been conducted for the failure mode, the test data is ordered into performance and capability populations, as illustrated at 44 in Fig. 2, which are estimated from the test data. Such test estimated populations are referred to in this specification and in the claims as "actual populations," and reliability values based thereon will be called "actual" reliability values. It should be understood that the term "actual" is not meant to imply actual or perfect knowledge of reliability but instead refers to an estimated reliability based on actual test results. Thus, estimated populations and reliability values are meant to refer to those determined based on estimates during the design phase before article specific test data are available whereas actual populations and reliability values are meant to refer to those determined based on estimates from actual test results. An actual joint or third population is derived, as illustrated at 46 in Fig. 2, from the actual populations in a manner similar to that used to derive the estimated third population 30. The actual performance and capability populations may sometimes be expected to be different from the respective estimated populations 22 and 24 since in some instances some of the contributing factors in one population during design may be contributing factors in the other population during testing. Thus, while the radius and thickness for the case hoop failure mode are in the performance population for design, they are in the capability population for testing. However, since the joint population remains constant when contributing factors are moved from one population to the other, this does not affect the ability to compare the estimated and actual tolerance factors. Thus, the actual third population, which is derived similarly from the actual performance and capability populations as the estimated third population is derived from the estimated performance and capability populations as explained previously with reference to Fig. 4, would be expected to be similar to the curve 30 for the estimated third population although there may be some instrumentation error and the like.

From the actual third population, the number of standard deviations from the mean of the actual third population to the point where the actual third population is zero, i.e., actual tolerance factor, is derived, as illustrated at 48 in Fig. 2, similarly as the estimated tolerance factor is derived as previously explained and illustrated at 32 in Fig. 2.

From the actual tolerance factor, the actual reliability value of the failure mode is determined, as illustrated at 50 in Fig. 2. This is determined by the use of the "K" tables or equivalent, i.e., the graph of Fig. 5. For example, if five tests were conducted and a tolerance factor of 7 is obtained, Fig. 5 shows the actual reliability value to be about 0.9996.

The allocated reliability value, as allocated with reference to 16 in Fig. 2, is then compared with the actual reliability value, as determined with reference to 50 in Fig. 2. If the actual reliability value is greater than or equal to the allocated reliability value, then the design for the failure mode may be accepted, as illustrated at 52 in Fig. 2. However, if the actual reliability value is less than the allocated reliability value, then a decision must be made as to whether the lower reliability value is acceptable. This decision may be made in conjunction with considerations of the desired reliability values of other failure modes which are also being tested. If it is determined that the lower reliability value is acceptable, then the failure mode is re-allocated this lower value and the reliability values are re-allocated to the other failure modes, as illustrated at 54 in Fig. 2, to achieve the target reliability value for the article. The design for the failure mode may then be accepted, as illustrated at 52 in Fig. 2.

If the lower actual reliability value is not acceptable or if AN UNPLANNED failure during testing is encountered, then a decision should be made whether to re-design for the failure mode as illustrated at 56 in Fig. 2, or increase the number of tests, as illustrated at 58 in Fig. 2, to obtain the desired higher reliability value. If the article is re-designed for the failure mode, then the process of obtaining estimated and actual reliability values must be repeated beginning with estimating the contributing factor variations, as illustrated at 18 in Fig. 2. If the decision is to increase the number of tests, then the number of increases tests is determined by reference to the "K" tables or equivalent, i.e., the graph of Fig. 5. For example, if the estimated tolerance factor for five tests at an allocated reliability value of 0.99996 was 8 and the actual tolerance factor is 7, Fig. 5 shows that about seven tests are needed for the tolerance factor of 7 to achieve the allocated reliability. Thus, two more tests would be required. The additional hardware is then built and tested, as illustrated at 40 in Fig. 2, and the actual and allocated reliability values are again compared. The process is then iterated as required or desired in accordance with Fig. 2 and as discussed herein.

However, if the actual reliability value is higher than the allocated reliability value, this means that the article may be over-designed for the failure mode. The design for the failure mode may be accepted. However, in order to achieve increased performance or reduced production cost without sacrifice of necessary reliability in accordance with the present invention, a decision may be made to re-design the article for the failure mode, as illustrated at 56 in Fig. 2, and the process of obtaining actual and estimated reliability values is repeated beginning with estimating the contributing factor variations, as illustrated at 18 in Fig. 2. If desired, however, the design may be accepted, as illustrated at 52 in Fig. 2.

Although the discussion so fas has been with reference to only one failure mode, it should be recognized that all of the identified failure modes may be analyzed simultaneously for the design and re-design of article portions relative thereto, and the reliability values re-allocated for all of the failure modes until the actual reliability values for all of the identified failure modes have been determined to be acceptable whereby higher costs and decreased performance of over-design of some article portions may be eliminated without sacrificing reliability. It should also be understood that it may be difficult to test for some failure modes in which event a decision may be made not to test for them and to instead allocate conservative reliability values to them which require that the design have conservative tolerance factors.

Individual failure modes such as case membrane hoop failure can be subjected to statistical sensitivity analyses, in accordance with principles commonly known to those of ordinary skill in the art to which this invention pertains, in order to identify and prioritize those causes of failure which have the greatest impact on overall article reliability, as illustrated at 59 in Fig. 2 and as discussed with reference to and shown in Table I. Input to the sensitivity studies and ranking may come from estimates of the contributing factor variations, as illustrated at 18 in Fig. 2, and the test results, as illustrated at 40 in Fig. 2, may be used for validation thereof. For instance, the example of Table II shows that the ratio of $\sigma t/\overline{x}t$ is greater than the ratio of $\sigma r/\overline{x}r$. This implies that the variation of wall thickness will contribute more variation to the performance population 22 than the variation in case radius will. By evaluation of all contributing factors to all identified failure modes, a prioritized list can be developed. This list may thus be used to select failure modes and causes which need to be controlled with greater attention during manufacturing. The controls may be conventional controls such as statistical, automated, and the like. The test results may be used as appropriate to validate the initial sensitivity studies, as illustrated at 60 in Fig. 2, and various controls including manufacturing, quality, and procedural controls, as illustrated at 62 in Fig. 2, are applied to the manufacturing process based upon the validated sensitivity studies. Once the overall design has been accepted and the manufacturing, quality, and procedural controls have been instituted, manufacture for the customer or customers, as illustrated at 64 in Fig. 2, may begin with an assurance of reliability but without unnecessarily sacrificing cost or performance.

As an example, Fig. 7 shows various stations on a rocket motor nozzle where sensitivity studies were conducted to determine which stations had the lowest reliability values and were thus candidates for re-design and/or more stringent manufacturing controls. Table III shows the results of those sensitivity analyses based on two assumed levels of testing, i.e., four tests and seven tests. The statistical data used to prepare these estimated reliability values were based on actual test data for a similar but not identical design. Thus, testing would still be required to obtain actual reliability values for this example. These analyses indicated, based on four tests, that there are six stations with estimated reliability levels of 0.99999999 or less, and they have been prioritized for attention with station N, which requires the highest level of attention/control, being assigned a priority ranking of 1. A second level of evaluation was also conducted which indicated that station R, which was the second most important reliability driver, is also the most significant design driver because of known hardware limitations. Based on this assessment, prudence would suggest that consideration be given to re-designing this station before the hardware is committed to a test program because of the significant program schedule delays and cost penalties that could result if undesirably abnormal performance was experienced at this station.

TABLE III

| Ablatives | | | | | |
|---|---|---|---|---|---|
| Station No. | Tolerance Factor | Estimated Reliability at 90% Confidence | | Reliability Drivers Relative Ranking | Significant Design Driver? |
| | | 7 Tests | 4 Tests | | |
| G | 36.22285 | 1.00000000 | 1.00000000 | | |
| H | 17.25121 | 1.00000000 | 1.00000000 | | |
| I | 98.99505 | 1.00000000 | 1.00000000 | | |
| J | 98.99505 | 1.00000000 | 1.00000000 | | |
| K | 49.856 | 1.00000000 | 1.00000000 | | |
| L | 15.94594 | 1.00000000 | 1.00000000 | | |
| M | 64.81872 | 1.00000000 | 1.00000000 | | |
| N | 09.324456 | 0.99999999 | 0.99998195 | 1 | No |
| O | 11.07649 | 1.00000000 | 0.99999968 | 3 | No |
| P | 15.1333 | 1.00000000 | 1.00000000 | | |
| Q | 18.01366 | 1.00000000 | 1.00000000 | | |
| R | 09.459001 | 0.99999999 | 0.99998642 | 2 | Yes |
| S | 19.87394 | 1.00000000 | 1.00000000 | | |
| T | 13.30874 | 1.00000000 | 1.00000000 | | |
| U | 18.60174 | 1.00000000 | 1.00000000 | | |
| V | 12.46481 | 1.00000000 | 0.99999999 | 6 | Possible |
| W | 11.32988 | 1.00000000 | 0.99999983 | 4 | No |
| X | 11.6277 | 1.00000000 | 0.99999992 | 5 | No |
| Y | 98.99505 | 1.00000000 | 1.00000000 | | |
| Ablatives Reliabilty = | | 0.99999998 | 0.99996779 | | |
| Stations with reliability values in excess of 0.99999999 are assigned a numerical value of 1.00000000. | | | | | |

The "K" Tables references herein are usually applicable to normal population distributions. However, the claims are not meant to be limited to the use of normal population distributions. The method described and claimed herein may be applied to populations which are non-normal, non-independent, or which do not have an equal number of data points in them.

It is to be understood that the invention is by no means limited to the specific embodiments which have been illustrated and described herein and that various modifications thereof may indeed be made which come within the scope of the present invention as defined by the appended claims.

**Claims**

1. A method of making an article having a pre-determined reliability value and confidence level comprising the steps of:

a. estimating a design for the article;

b. allocating from the predetermined reliability value a reliability value at the confidence level for at least one failure mode of at least one portion of the article;

c. estimating the variation of each contributing factor to the at least one failure mode;

d. organizing the contributing factor estimates into an estimated performance population and an estimated capability population;

e. deriving an estimated third population from the estimated performance and capability populations by applying a failure function;

f. determining the number of standard deviations from the mean of the estimated third population to the point where the estimated value of the failure function is equal to zero;

g. determining for the number of standard deviations the number of tests required to verify the allocated reliability value of the at least one failure mode;

h. adjusting the number of standard deviations for a selected number of tests by re-estimating the design of the article portion and repeating steps c through g until the number of tests required for the at least one failure mode for the re-estimated design is equal to or less than the selected number of tests;

i. creating a number of the article portions having the re-estimated design for the required number of tests for the at least one failure mode for the re-estimated design;

j. testing at least some of the created article portions to determine the actual performance and actual capability populations of the at least one failure mode;

k. deriving an actual third population from the actual performance and capability populations by applying a failure function;

l. determining the number of standard deviations from the mean of the actual third population to the point where the actual value of the failure function is equal to zero;

m. determining for the number of standard deviations from the mean of the actual third population and for the number of tests conducted the actual reliability value of the at least one failure mode for the re-estimated design;

n. comparing the actual reliability value of the at least one failure mode for the re-estimated design to the allocated reliability value of the at least one failure mode;

o. selecting the design for the at least one failure mode by adjusting the re-estimated design for the at least one failure mode and repeating steps c through o or by changing the number of tests to be conducted to obtain an actual reliability value which is equal to at least the allocated reliability value for the at least one failure mode and repeating steps j through o or by allocating a different reliability value to the at least one failure mode and accepting the re-estimated design or by determining that the allocated reliability value for the at least one failure mode is acceptable and accepting the re-estimated design; and

p. making at least one of the article having the selected design for the at least one failure mode.

2. A method according to Claim 1 wherein the article is a rocket motor.

3. A method according to Claim 1 wherein the step of deriving an estimated third population comprises subtracting the estimated performance population from the estimated capability population to derive an estimated difference which defines the estimated third population wherein values of the estimated difference which are greater than zero represent non-failures and values of the estimated difference which are less than zero represent failures, and the step of deriving an actual third population comprises subtracting the actual performance population from the actual capability population to derive an actual difference which defines the actual third population from which an actual reliability value of the at least one failure mode for the re-estimated design can be determined wherein values of the actual difference which are greater than zero represent non-failures and values of the actual difference which are less than zero represent failures.

4. A method according to Claim 3 wherein the estimated difference between the estimated performance and estimated capability populations and the actual difference between the actual performance and actual capability populations are obtained by subtracting in a random-variable fashion.

5. A method according to Claim 3 wherein the article is a solid propellant rocket motor.

6. A method according to Claim 1 further comprising repeating steps b through o for each other identified failure mode of each article portion.

7. A method for developing an article to a pre-determined reliability value and confidence level comprising the steps of:

a. estimating a design for the article;

b. allocating from the predetermined reliability value a reliability value at the confidence level for at least one failure mode of at least one portion of the article;

c. estimating the variation of each contributing factor to the at least one failure mode;

d. organizing the contributing factor estimates into an estimated performance population and an estimated capability population;

e. deriving an estimated third population from the estimated performance and capability populations by applying a failure function;

f. determining the number of standard deviations from the mean of the estimated third population to the point where the estimated value of the failure function is equal to zero;

g. determining for the number of standard deviations the number of tests required to verify the allocated reliability value of the at least one failure mode;

h. adjusting the number of standard deviations for a selected number of tests by re-estimating the design of the article portion and repeating steps c through g until the number of tests required for the at least one failure mode for the re-estimated design is equal to or less than the selected number of tests;

i. creating a number of the article portions having the re-estimated design for the required number of tests for the at least one failure mode for the re-estimated design;

j. testing at least some of the created article portions to determine the actual performance and actual capability populations of the at least one failure mode;

k. deriving an actual third population from the actual performance and capability populations by applying a failure function;

l. determining the number of standard deviations from the mean of the actual third population to the point where the actual value of the failure function is equal to zero;

m. determining for the number of standard deviations from the mean of the actual third population and for the number of tests conducted the actual reliability value of the at least one failure mode for the re-estimated design; and

n. comparing the actual reliability value of the at least one failure mode for the re-estimated design to the allocated reliability value of the at least one failure mode to make a choice between adjusting the re-estimated design for the at least one failure mode and repeating steps c through n; changing the number of tests to be conducted to obtain an actual reliability value which is equal to at least the allocated reliability value for the at least one failure mode and repeating steps j through n; allocating a different reliability value to the at least one failure mode and accepting the re-estimated design; and determining that the allocated reliability value for the at least one failure mode is acceptable and accepting the re-estimated design.

8. A method according to Claim 7 further comprising making at least one of the article having a design for the at least one failure mode developed in accordance with steps a to n.

9. A method according to Claim 7 further comprising selecting the design for the at least one failure mode in accordance with the choice of step n.

10. A method according to Claim 9 further comprising making at least one of the article having a design for the at least one failure mode developed in accordance with steps a to n.

11. A method according to Claim 7 further comprising ranking the contributing factors to each of the identified failure modes of each article portion to identify those of the contributing factors which have the highest potential for contributing to the article failure rate and prioritizing manufacturing and quality controls in accordance with the ranked contributing factors.

12. A method according to Claim 7 wherein the article is a solid propellant rocket motor.

13. A method according to Claim 7 wherein the step of deriving an estimated third population comprises subtracting the estimated performance population from the estimated capability population to derive an estimated difference which defines the estimated third population wherein values of the estimated difference which are greater than zero represent non-failures and values of the estimated difference which are less than zero represent failures, and the step of deriving an actual third population comprises subtracting the actual performance population from the actual capability population to derive an actual difference which defines the actual third population from which an actual reliability value of the at least one failure mode for the re-estimated design can be determined wherein values of the actual difference which are greater than zero represent non-failures and values of the actual difference which are less than zero represent failures.

14. A method according to Claim 13 wherein the estimated difference between the estimated performance and estimated capability populations and the actual difference between the actual performance and actual capability populations are obtained by subtracting in a random-variable fashion.

15. A method according to Claim 7 further comprising repeating steps b through n for each other identified failure mode of each article portion.

16. An article having a pre-determined reliability value and confidence level made in accordance with a design developed by a method which comprises the steps of:

a. estimating a design for the article;

b. allocating from the predetermined reliability value a reliability value at the confidence level for at least one failure mode of at least one portion of the article;

c. estimating the variation of each contributing factor to the at least one failure mode;

d. organizing the contributing factor estimates into an estimated performance population and an estimated capability population;

e. deriving an estimated third population from the estimated performance and capability populations by applying a failure function;

f. determining the number of standard deviations from the mean of the estimated third population to the point where the estimated value of the failure function is equal to zero;

g. determining for the number of standard deviations the number of tests required to verify the allocated reliability value of the at least one failure mode;

h. adjusting the number of standard deviations for a selected number of tests by re-estimating the design of the article portion and repeating steps c through g until the number of tests required for the at least one failure mode for the re-estimated design is equal to or less than the selected number of tests;

i. creating a number of the article portions having the re-estimated design for the required number of tests for the at least one failure mode for the re-estimated design;

j. testing at least some of the created article portions to determine the actual performance and actual capability populations of the at least one failure mode;

k. deriving an actual third population from the actual perforamnce and capability populations by applying a failure function;

l. determining the number of standard deviations from the mean of the actual third population to the point where the actual value of the failure function is equal to zero;

m. determining for the number of standard deviations from the mean of the actual third population and for the number of tests conducted the actual reliability value of the at least one failure mode for the re-estimated design; and

n. comparing the actual reliability value of the at least one failure mode for the re-estimated design to the allocated reliability value of the at least one failure mode to make a choice between adjusting the re-estimated design for the at least one failure mode and repeating steps c through n; changing the number of tests to be conducted to obtain an actual reliability value which is equal to at least the allocated reliability value for the at least one failure mode and repeating steps j through n; allocating a different reliability value to the at least one failure mode and accepting the re-estimated design; and determining that the allocated reliability value for the at least one failure mode is acceptable and accepting the re-estimated design.

17. An article according to Claim 16 wherein the article is a rocket motor.

18. An article according to Claim 16 wherein the article is a solid propellant rocket motor.

19. An article according to Claim 16 wherein the estimated third population is derived by subtracting the estimated performance population from the estimated capability population to derive an estimated difference which defines the estimated third population wherein values of the estimated difference which are greater than zero represent non-failures and values of the estimated difference which are less than zero represent failures, and the actual third population is derived by subtracting the actual performance population from the actual capability population to derive an actual difference which defines the actual third population from which an actual reliability value of the at least one failure mode for the re-estimated design can be determined wherein values of the actual difference which are greater than zero represent non-failures and values of the actual difference which are less than zero represent failures.

20. An article according to Claim 19 wherein the estimated difference between the estimated performance and estimated capability populations and the actual difference between the actual performance and actual capability populations are obtained by subtracting in a random-variable fashion.

21. An article according to Claim 16 wherein the design for the at least one failure mode is selected in accordance with the choice of step n.

22. An article according to Claim 16 wherein the contributing factors to each of the identified failure modes of each article portion are ranked to identify those of the contributing factors which have the highest potential for contributing to the article failure rate and manufacturing and quality controls are prioritized in accordance with the ranked contributing factors.

23. A method of making an article having a pre-determined reliability value and confidence level comprising the steps of:

a. estimating a design for the article;

b. allocating from the predetermined reliability value a reliability value at the confidence level for at least one failure mode of at least one portion of the article;

c. estimating the variation of each contributing factor to the at least one failure mode;

d. organizing the contributing factor estimates into an estimated performance population and an estimated capability population;

e. subtracting the estimated performance population from the estimated capability population to derive an estimated difference which defines an estimated third population wherein values of the estimated difference which are greater than zero represent non-failures and values of the estimated difference which are less than zero represent failures;

f. determining the number of standard deviations from the mean of the estimated third population to the point where the estimated difference is zero;

g. determining for the number of standard deviations the number of tests required to verify the allocated reliability value of the at least one failure mode;

h. adjusting the number of standard deviations for a selected number of tests by re-estimating the design of the article portion and repeating steps c through g until the number of tests required for the at least one failure mode for the re-estimated design is equal to or less than the selected number of tests;

11

i. creating a number of the article portions having the re-estimated design for the required number of tests for the at least one failure mode for the re-estimated design;

j. testing at least some of the created article portions to determine the actual performance and actual capability populations of the at least one failure mode;

k. subtracting the actual performance population from the actual capability population to derive an actual difference which defines an actual third population from which an actual reliability value of the at least one failure mode for the re-estimated design can be determined wherein values of the actual difference which are greater than zero represent non-failures and values of the actual difference which are less than zero represent failures;

l. determining the number of standard deviations from the mean of the actual third population to the point where the actual difference is zero;

m. determining for the number of standard deviations from the mean of the actual third population and for the number of tests conducted the actual reliability value of the at least one failure mode for the re-estimated design;

n. comparing the actual reliability value of the at least one failure mode for the re-estimated design to the allocated reliability value of the at least one failure mode;

o. selecting the design for the at least one failure mode by adjusting the re-estimated design for the at least one failure mode and repeating steps c through o or by changing the number of tests to be conducted to obtain an actual reliability value which is equal to at least the allocated reliability value for the at least one failure mode and repeating steps j through o or by allocating a different reliability value to the as least one failure mode and accepting the re-estimated design or by determining that the allocated reliability value for the at least one failure mode is acceptable and accepting the re-estimated design; and

p. making at least one of the article having the selected design for the at least one failure mode.

EP 0 375 435 A2

PRIOR ART

Fig. 1

Fig. 3

Fig. 4

Fig. 2

Fig. 5

Fig. 7

Fig. 6

EP 0 375 435 A2